# EUROPEAN PATENT SPECIFICATION

(11) **EP 1 386 498 B1**
(45) Date of publication and mention of the grant of the patent: **29.06.2011**
(21) Application number: 02735214.5
(22) Date of filing: 27.03.2002
(51) Int. Cl.: H04W 48/18

(54) **APPARATUS FOR MANAGING CAPABILITIES IN A COMMUNICATIONS NETWORK AND METHOD THEREFOR**
VORRICHTUNG UND VERFAHREN ZUM VERWALTEN VON FÄHIGKEITEN IN EINEM KOMMUNIKATIONSNETZWERK
APPAREIL DESTINE A GERER DES CAPACITES DANS UN RESEAU DE COMMUNICATION ET PROCEDE ASSOCIE

(30) Priority: 30.03.2001 GB 0108019
(43) Date of publication of application: 04.02.2004
(73) Proprietor: Motorola Mobility, Inc., Libertyville, IL 60048 (US)
(72) Inventor: ROBINSON, William Neil, Farnham, Surrey GU9 9ED (GB)
(74) Representative: Cross, Rupert Edward Blount
(86) International application number: PCT/EP2002/003678
(87) International publication number: WO 2002/080584

(56) References cited:
- WO-A-00/13447
- WO-A-00/59160
- WO-A-00/70885
- WO-A-01/19096
- WO-A-96/20448
- US-A- 6 157 648

## Description

### Field of the Invention

The present invention relates to a method of and apparatus for managing capabilities in a communications system, for example, a system where service capabilities rather than services per se are standardised, such as a Universal Mobile Telecommunications System (UMTS).

### Background of the Invention

As described above, the UMTS standard only standardises service capabilities, for example, data rates, Bit Error Rates (BERs), Latency, Delay Variations and Basic Service Type, such as voice telephony, and does not standardise the service itself, i.e. the service capabilities for service types. This is in contrast to the Global System for Mobile Communications (GSM), where each telecommunications service is generally standardised to bit level.

European Telecommunications Standards Institute (ETSI) 3GPP (Third Generation Partnership Project) has specified mandatory service capabilities for a predetermined number of telecommunications services, for example, voice telephony and video telephony. However, the 3GPP specification is limited and does not cater for other services not forming part of the predetermined number of services.

PCT patent application no. WO 00/70885 describes a method of negotiating a call capability between signalling points in a telecommunication system. The method comprises sending a capability preference or prioritised list of preferences from an originating signalling point to a terminating signalling point or signalling transfer point, at the Call Control level. A capability acceptance is returned from the terminating signalling point or signalling transfer point to the originating signalling point at the Call Control level, if the terminating signalling point or signalling transfer point accepts a preference set by the originating signalling point.

PCT patent application no. WO 00/13447 describes a method of bandwidth provisioning wherein a bandwidth provider responsible for a given bandwidth provides different amounts of bandwidth to respective partial users. The method comprises determining a bandwidth availability profile, determining a traffic profile and finally transmitting capacity information (i.e. a bandwidth availability profile and a traffic profile) to a partial user.

### Summary of the Invention

According to a first aspect of the invention, there is provided a method of managing service capabilities in a communications network as recited in the accompanying claims.

According to a second aspect of the present invention, there is provided

According to a second aspect of the invention there is provided an apparatus for managing capabilities in a communications network as recited in the accompanying claims.

It is thus possible to provide a communications apparatus and method therefor that are flexible enough to allow the network infrastructure to autonomously and dynamically manage the level of flexibility required for communications systems where service capabilities are standardised, for example, the UMTS. Also, the present invention allows other, currently undefined, services to be supported by a communications system comprising the apparatus for managing capabilities. The present invention is capable of managing service capabilities in the light of available system resources.

### Brief Description of the Drawings

At least one embodiment of the invention will now be described, by way of example, with reference to the accompanying drawings, in which:
**Figure 1** is a schematic diagram of a telecommunications network constituting an embodiment of the present invention;
**Figure 2** is a schematic diagram of an element of the network of Figure 1;
**Figure 3** is a schematic diagram of another element of the network of Figure 1;
**Figure 4** is a flow diagram of operation of the elements of Figures 2 and 3;

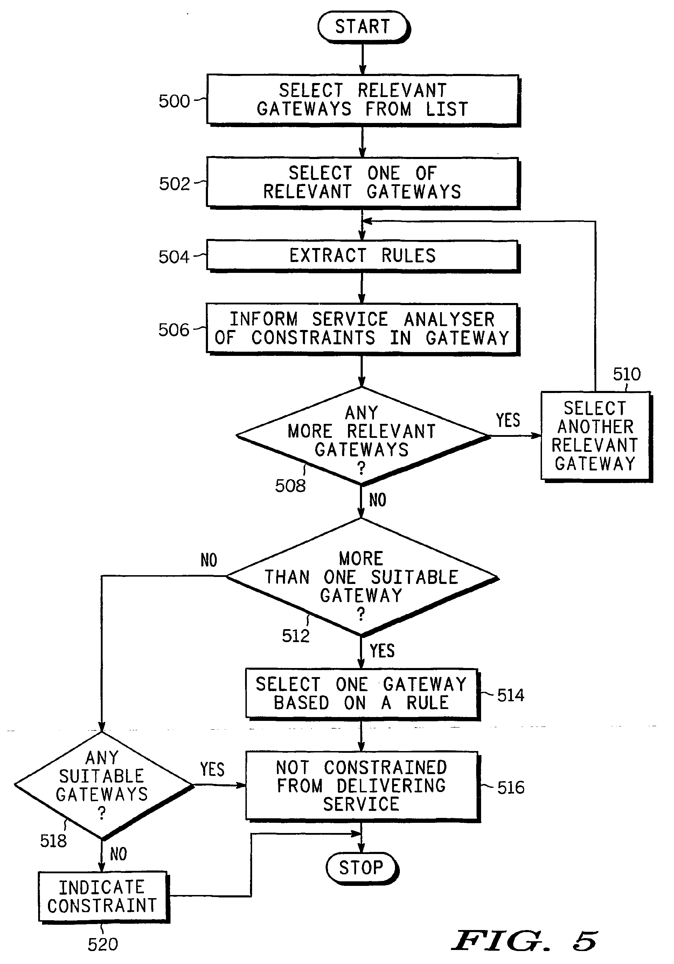

**Figure 5** is a flow diagram of a step of Figure 4 in more detail;
**Figure 6** is a flow diagram of another step of Figure 4 in more detail;
**Figure 7** is a flow diagram showing yet another step of Figure 4 in more detail; and

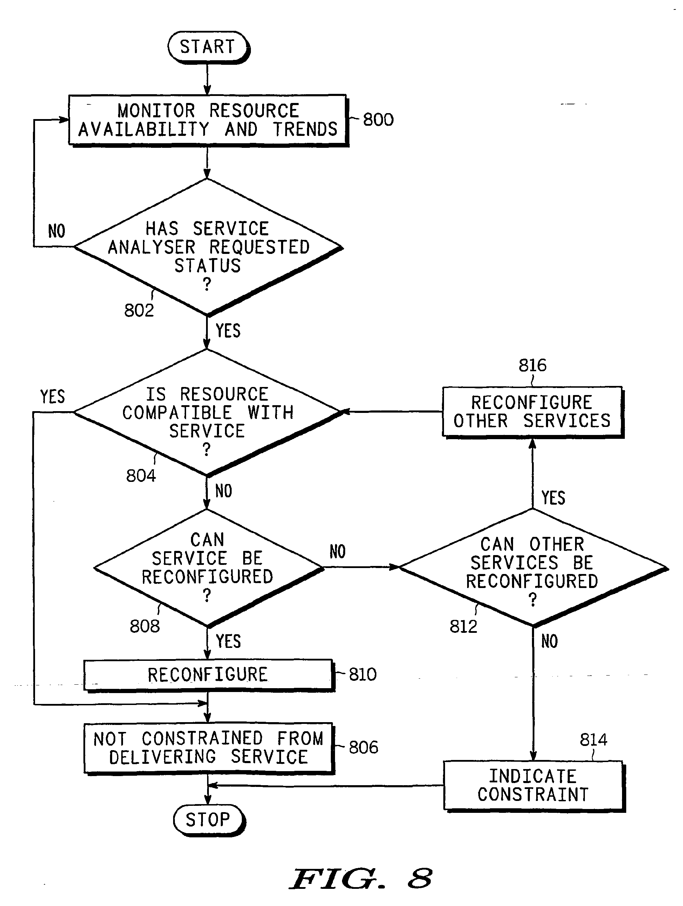

**Figure 8** is a flow diagram showing a further step of Figure 4 in more detail.

### Description of a Preferred Embodiment

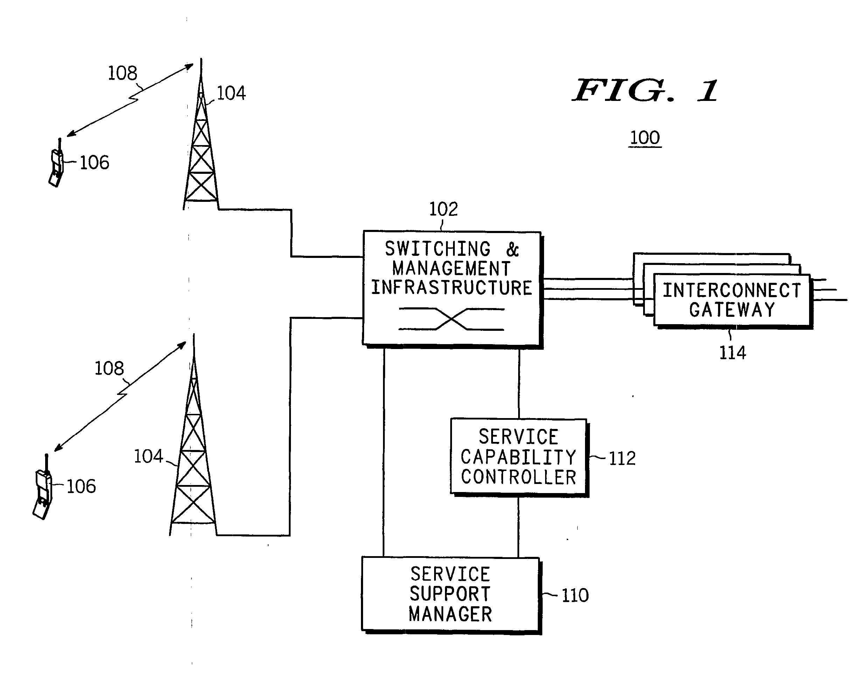

A telecommunications network 100 (FIG. 1) includes a network entity comprising a switching and management infrastructure 102 connected to at least one Base Transceiver Stations (BTS) 104 capable of communication with a respective, at least one, Mobile Station (MS) 106, for example, a cellular telephone handset, via a radio frequency interface 108.

The switching and management infrastructure 102 is also connected to a service support management unit 110, both directly and indirectly via a service capability controller 112. A plurality of gateways 114 are also connected to the switching and management infrastructure 102.

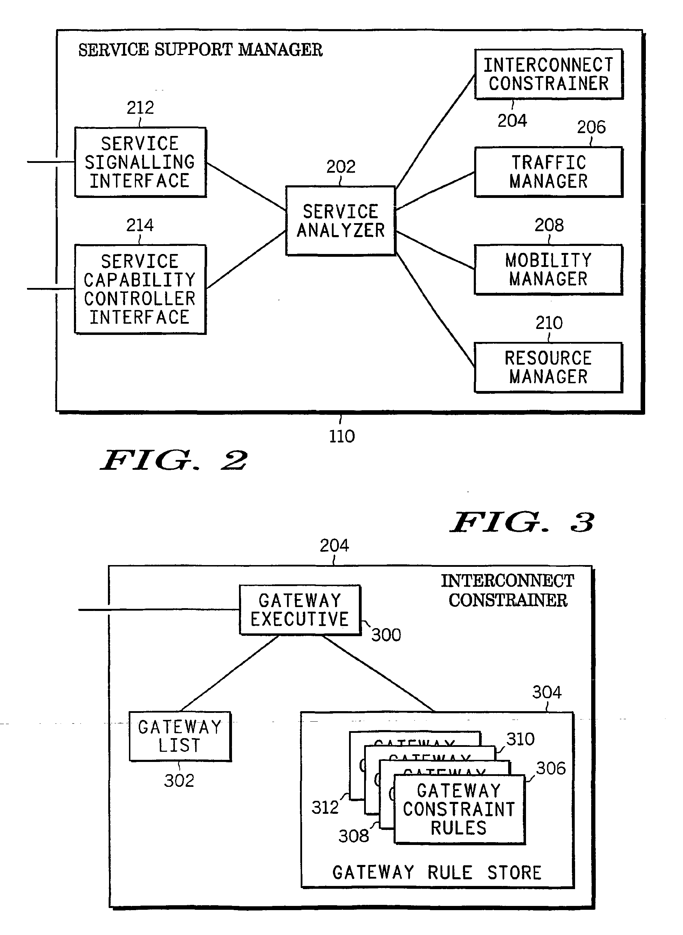

Referring to FIG. 2, the service support management unit 110 comprises a service signalling interface 212 connected to the switching and management infrastructure 102 and a service analysis unit 202, the service analysis unit 202 also being connected to a service capability controller interface 214. The service capability controller interface 214 is connected to the service capability controller 112.

An interconnect constrainer unit 204, a traffic management unit 206, a mobility management unit 208 and a resource management unit 210 are each connected to the service analysis unit 202.

Referring to FIG 3, the interconnect constrainer unit 204 comprises a gateway executive unit 300 connected to the service analysis unit 202. A gateway list store 302 and a gateway rule store 304 are also each connected to the gateway executive unit 300, the gateway rule store 304 having a plurality of gateway constraint rule sets 806, 308, 310, 312 stored therein.

The gateway list store 302 comprises a list of available gateways along with information relating to the suitability of each of the available gateways for certain types of telecommunication service. For example, a gateway 'A' to an analogue Public Switched Telecommunications Service (PSTN) is not indicated in the list of available gateways as suitable for high speed packet data services, but gateway 'A' is indicated as being suitable for speech, fax and low rate data services.

Each of the plurality of gateway constraint rules sets 306, 308, 310, 312 correspond, respectively, to each of the available gateways. Each set of gateway constraint rules 306, 308, 310, 312 is based upon knowledge of interworking functions that are possible for a combination of gateways or the corresponding gateway. An interworking function is a function that translates information from a first format to a second, corresponding format. For example, in order to be carried by a mobile voice telecommunications system, speech can be encoded at a data rate of 16 kbits/s using a vocoder. However, in order to deliver the 16 kbits/s encoded voice signal to a digital PSTN for connection to a landline telephone, the PSTN being coupled to a gateway 'B', the 16 kbits/s speech signal has to be transcoded into a 64 kbits/s Pulse Code Modulation (PCM) signal for the digital PSTN. Knowledge of this transcoding capability is used in specifying the gateway constraint rules for the gateway 'B', such as: only 16 kbits/s speech is to be used in support of a requested voice telephony service when using gateway "B", and 8 kbits/s speech is not to be used.

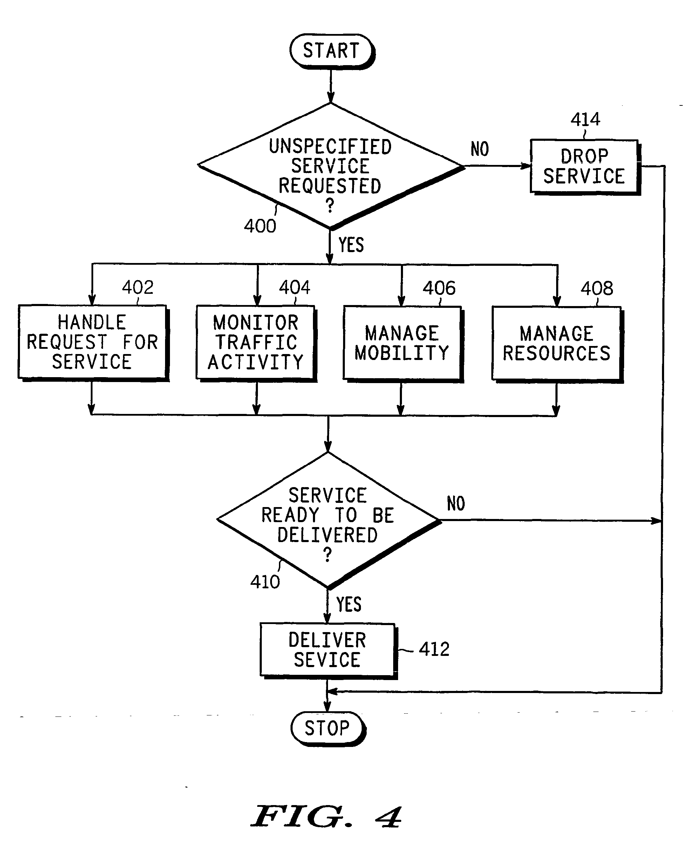

In operation (FIG. 4), a request for an unspecified service is awaited (step 400) by the service analyser unit 202 via the service signalling interface 212. Unspecified services are services that have not been predetermined by a standardisation body to have a set of mandatory service capabilities, the standardisation body being defined as any entity capable of specifying the set of mandatory service capabilities of services.

Upon receiving the request for the unspecified service, the interconnect constrainer 204 handles (step 402) the request for the service. Referring to FIG. 4, the gateway executive unit 300 accesses the gateway list 302 to determine which-gateways from the list of available gateways are suitable for the requested service.

In a first embodiment of the invention, having selected one or more suitable gateways the gateway executive unit 300 extracts the appropriate gateway constraint rules and further extracts the appropriate rules for the requested service. The gateway executive 300 then informs the service analyser unit 202 of any constraints due to the use of the gateway which must be applied to the selection and dimensioning of the standard service components. Where a choice of gateways is possible, this choice is also made known to the service analyser unit 202 with the appropriate constraints associated for each possible gateway.

In a second embodiment of the invention, relevant gateways are selected (step 500) from the gateway list store 302 and a first of the relevant gateways is selected (step 502). Gateway rule sets 306, 308, 310, 312 corresponding to the first of the relevant gateways are extracted (step 504) from the gateway rule store 304 and rules pertaining to the service requested are further extracted.

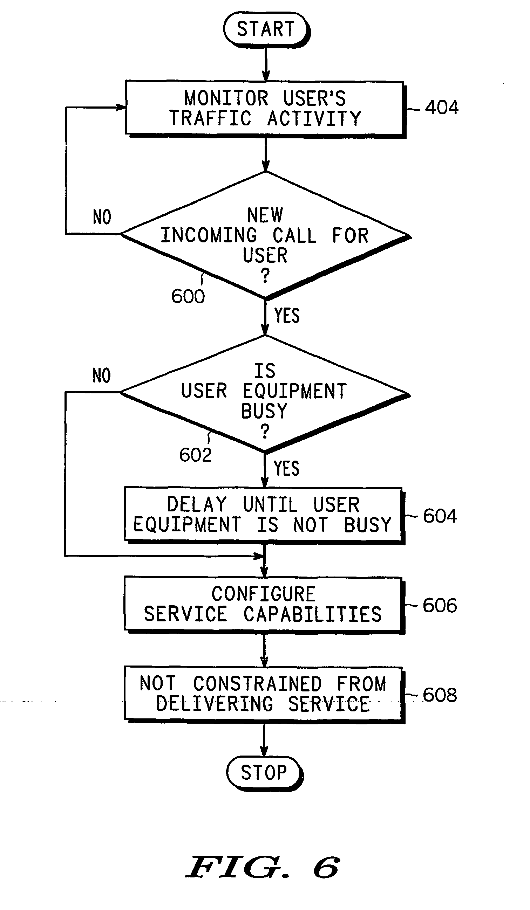

The gateway executive unit 300 then informs (step 506) the service analyser unit 202 of any respective constraints associated with use of the extracted gateway. The gateway executive unit 300 then determines whether other relevant gateways remain (step 508), another relevant gateway being selected (step 510) if other relevant gateways remain. Hence, steps 504 to 508 are then repeated in relation to other relevant gateways until no more relevant gateways remain. If more than one gateway has been reported (step 512) to the service analyser unit 202, the service analyser unit 202 selects (step 514) one of the relevant gateways based upon a pertinent rule, for example, cost, gateway loading, or even at random. Once a suitable gateway has been selected (step 514) the interconnect constrainer 204 informs (step 516) the service analyser unit 202 that, from the perspective of the interconnect constrainer 204, i.e. available gateways, there is no constraint to delivering the service requested. If none, or only one suitable gateway exists, the interconnect constrainer 204 determines (step 518) whether any suitable gateways exist. If the one suitable gateway is found, the interconnect constrainer 204 informs (step 516) the service analyser unit 202 that, from the perspective of the interconnect constrainer 204, i.e. available gateways, there is no constraint to delivering the service requested. Otherwise, the interconnect constrainer 204 informs (step 520) the service analyser unit 202 that no suitable gateways exist and that a constraint to delivering the requested service exists. Referring back to FIG. 4, whilst the service analyser unit 202 processes service requests, the traffic manager unit 206 monitors (step 404) overall traffic activity of the MS 106 and the telecommunications network 100 and, referring to FIG. 6, determines (step 600) when a new incoming call exists for the MS 106, for example, an incoming multimedia call. If the traffic manager unit 206 determines (step 602) that the MS 106 is already taking part in another multimedia call, the traffic manager unit 206 informs the service analyser unit 202 that the multimedia call should not be delivered immediately (step 604). Based on this information, the service analyser unit 202 can delay the selection of the service requested and selection of technical parameters (sometimes known as "dimensioning") that define the standard service capabilities of the service requested to allow for busy services to become free for deployment of new services, such as the incoming multimedia call. Once the busy services are free, a set of service capabilities of the unspecified service are configured (step 606) and the traffic management unit 206 informs (step 608) the service analyser unit 202 that, from the perspective of the traffic management unit 206, i.e. traffic loading information, there is no constraint to delivering the service requested.

Referring back to FIG. 4, mobility management unit 208 is arranged to provide (step 406) mobility status information regarding the MS 106 upon request from the service analyser unit 202, for example, at the same time as the request for service is being handled and traffic activity is being monitored. The service analyser unit 202 is then able to identify services that can be made available to the MS 106.

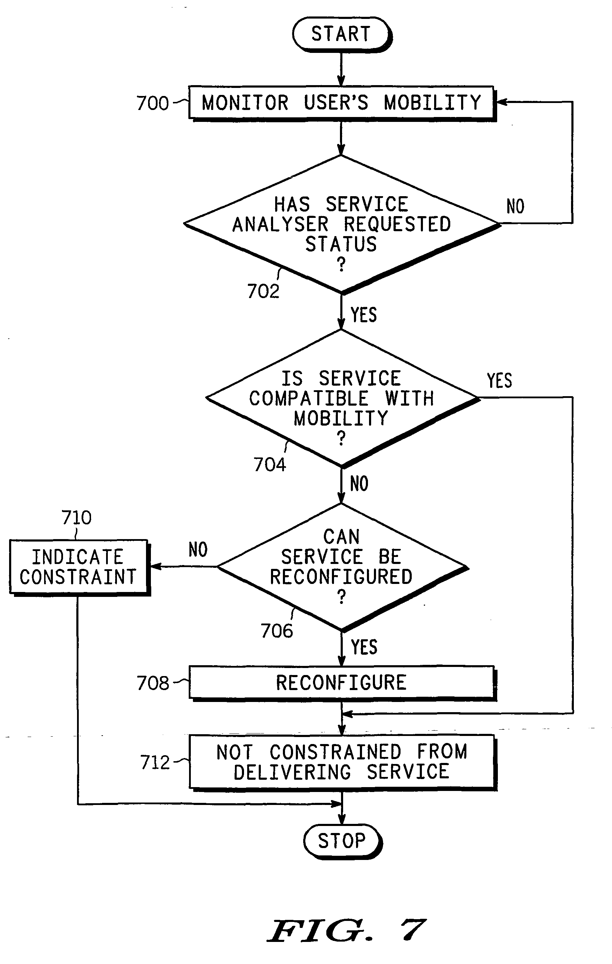

Referring to FIG. 7, the mobility management unit 208 monitors (step 700) the mobility of the MS 106 and determines (step 702) when the service analyser unit 202 requests mobility status information regarding the MS 106. The mobility management unit 208 then determines (step 704) whether a service being requested is compatible with the mobility of the MS 106. For example, a highly mobile user in a motor vehicle may not be given access to service capabilities involving difficult handovers. If the service being requested is incompatible with the mobility of the MS 106, the mobility management unit 208 determines (step 706) whether the service being requested can be reconfigured. For example, if the highly mobile user wants to receive video and text services, the service analyser unit 202 can embed text into a video image prior to transmission across the radio interface 108 instead of transmitting the text and the video image separately, thereby reducing handover complexity. The embedded text can then be extracted upon receipt using image-recognition technology known in the art. If the service being requested can be reconfigured, the service is reconfigured (step 708), otherwise the mobility management unit 208 informs (step 710) the service analyser unit 202 that a constraint to the delivery of the requested service exists. Once the service has been reconfigured, or if the service is already compatible with the mobility of the MS 106, the mobility management unit 208 informs the service analyser unit 202 that, from the perspective of the mobility management unit 208, i.e. mobility of the MS 106, there is no constraint to delivering the service requested (step 712).

Contemporaneously, (FIG. 4), the resource management unit 210 can be accessed (step 408) by the service analyser 202 in order to determine available resources at a given point in time. The resource management unit 210 has access in real time to information concerning instantaneous use and availability of resources from the switching and management infrastructure 102 via the service signalling interface 212, for example internally generated information such as a number of subscribers in a cell, a number of subscribers entering the cell in a given period of time, a number of subscribers leaving the cell in a given period of time, radio-frequency performance in the cell or noise floor. The resource management unit 210 monitors trends in uses of the resources, for example changes to overall traffic levels in the mobile telecommunications network 100. Examples of resource availability information include: received Signal to Noise Ratio (SNR), a remaining available capacity in the network 100 for traffic, and/or a rate of random access attempts to access the network 100.

The resource management unit 210 monitors (step 800) resource availability and trends and determines (step 802) when the service analyser unit 202 requests resource status information. If resource status information is requested by the service analyser unit 202, the resource management unit determines (step 804) if the resource required is compatible with the service requested. If the service requested is compatible with the resource, the resource management unit 210 informs (step 806) the service analyser unit 202 that, from the perspective of the resource management unit 210, i.e. resource availability and use, there is no constraint to delivering the service requested. Otherwise the resource management unit 210 determines (step 808) whether the service can be reconfigured. If the service can be reconfigured, the service is reconfigured (step 810) and the resource management unit 210 informs (step 806) the service analyser unit 202 that, from the perspective of the resource management unit 210, i.e. resource availability and use, there is no constraint to delivering the service requested. If the service can not be reconfigured, the resource management unit 210 determines (step 812) whether other services can be reconfigured so as to enable the resource management unit 210 to accommodate the requested service. If the other services can not be reconfigured, the resource management unit 210 informs (step 814) the service analyser unit 202 that a constraint to delivery of the requested service exists, otherwise, the other services are reconfigured (step 816) and the resource management unit 210 again determines (step 804) whether the resource required by the requested service is compatible with the reconfigured services, and repeats the above described analysis (steps 808 to 816, if necessary) in respect of the reconfigured other services.

In accordance with a first embodiment of the invention, having taken into account the information provided by the interconnect constrainer unit, the traffic management unit, the mobility manager unit and the resource management unit,-the-service analyser unit will select and dimension the service capabilities, or technical parameters, to be used in support of the requested service. This selection and the associated dimensions are passed to the service capability controller unit via the service capability controller interface. Throughout the lifetime of the requested service, the service support management unit can maintain the service by modifying the selection and dimensioning of the standard service capabilities during the call according to the constraints and opportunities which occur from time to time.

The service capability controller unit, having received instructions from the service support management unit, establishes the selected service capabilities in the dimensions prescribed by the service support management unit. The switching and transmission facilities of the network are set up in the normal way to provide the requested service, albeit based on the service capabilities chosen rather than being based on the requested service directly.

In accordance with a second embodiment of the invention, and referring back to FIG. 4, if each of the interconnect constrainer 204, the traffic management unit 206, the mobility management unit 208 and the resource management unit 210 provide an indication (step 410) to the service analyser unit 202 that the requested service is not constrained from being delivered, the service analyser unit 202 permits (step 412) delivery of the service being requested. Otherwise, if the indication is not received from one of the interconnect constrainer 204, the traffic management unit 206, or the mobility management unit 208 and the resource management unit 210, the service analyser unit 202 drops (or declines) the service being requested (step 414).

Of course, the first and second embodiments of the invention may be implemented together.

The above example assumes that resources external to the telecommunications network 100 are required. However, if resources external to the telecommunication network 100 are not required, the service analyser unit 202 does not require the interconnect constrainer 204 to provide any information, from the perspective of the gateway executive unit 300, regarding any constraints to delivering the service. In a situation where resources external to the telecommunications network 100 are not required, unless the traffic management unit 206, the mobility management unit 208 or the resource management unit 210 require parameter changes, for example bit rate, from a default setting, the default setting is employed.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or nonvolatile, such as semiconductor, magnetic, optical or other memory device.

## Claims

1. A method of managing service capabilities in a telecommunications network in response to a service request comprising the steps of:
determining which gateways from a list of available gateways (302) are suitable for the requested service;
extracting appropriate gateway constraint rules (306 through 312) from a gateway rule store (304);
extracting appropriate rules for the requested service;
transferring any constraint rules due to the use of the gateway and rules for the requested service to a service analyzer unit (202);
selecting technical parameters for the instantiation of the service consistent with those transferred constraint rules; and
establishing the service using service capabilities conforming to the selected technical parameters.

2. The method as claimed in claim 1, further comprising the steps of:
requesting an indication from a gateway rule store (204) whether or not any constraint to providing the requested service with the service capabilities exists, and
establishing the requested service by dynamically providing the service capabilities if it is determined that no constraint exists.

3. The method as claimed in claim 2, further comprising the step of evaluating each service capability required to provide the requested service to determine whether a constraint exists.

4. A method as claimed in Claim 2 or 3, further comprising the step of:
providing by the gateway rule store an indication that a constraint exists when no suitable gateways exist for the requested service.

5. A method as claimed in any preceding Claim, wherein the gateway constraint rules of each gateway is based upon an interworking function of the gateway.

6. A method as claimed in Claim 5, wherein the interworking function is transcoding.

7. A method as claimed in any one of the preceding claims, further comprising the steps of:
requesting an indication from a traffic management unit whether or not any constraint to providing the requested service with the service capabilities exists;
providing by the traffic management unit an indication that a constraint exists when analysis of traffic activity indicates that the telecommunications network cannot support the requested service;
establishing the requested service by dynamically providing the service capabilities if it is determined from the analysis of traffic activity that no constraint exists.

8. A method as claimed in any one of the preceding claims, further comprising the steps of:
requesting an indication from a mobility management unit whether or not any constraint to providing the requested service with the service capabilities exists;
providing by the mobility management unit an indication that a constraint exists when analysis determining the mobility of a terminal indicates that the telecommunications network cannot support the requested service;
establishing the requested service by dynamically providing the service capabilities if it is determined from the analysis of terminal mobility that no constraint exists.

9. A method as claimed in any one of the preceding claims, further comprising the steps of:
requesting an indication from a resource management unit whether or not any constraint to providing the requested service with the service capabilities exists;
providing by the resource management unit an indication that a constraint exists when analysis of resources available to a terminal indicates that the telecommunications network cannot support the requested service;
establishing the requested service by dynamically providing the service capabilities if it is determined from the analysis of resources available to the terminal that no constraint exists.

10. A method as claimed in any preceding Claim, further comprising determining (808) whether the requested service can be reconfigured.

11. A method as claimed in Claim 10, further comprising reconfiguring (810) other services supported by the network.

12. A method as claimed in any one of the preceding claims, further comprising selecting at least one technical parameter that defines the at least one service capability after selecting the service capability.

13. A method as claimed in any of the preceding claims, further comprising selecting at least one technical parameter that defines the at least one service capability throughout the duration of a call.

14. A method as claimed in any one of the preceding claims, further comprising setting up the switching and transmitting facilities of the telecommunications network (100) in order to establish the requested service based on the selected technical parameters.

15. An apparatus for managing service capabilities in a telecommunications network in response to a service request comprising:
a gateway executive(300) for determining which gateways from a list of available gateways (302) are suitable for the requested service and for extracting appropriate gateway constraint rules (306 through 312) from a gateway rule store (304);
means for extracting the appropriate rules for the requested service;
means for transferring any constraint rules due to the use of the gateway and rules for the requested service to a service analyzer unit (202);
means for selecting technical parameters for the instantiation of the service consistent with those constraints; and
means for establishing the service using service capabilities conforming to the selected technical parameters.

16. An apparatus as claimed in claim 15 further comprising a service support management unit (110) arranged to request an indication of which gateways from a list of available gateways are suitable for the requested service and an indication from a gateway rule store (204), or a traffic management unit (206), or a mobility management unit (208) or a resource management unit (402, 404, 406, 408) whether or not any constraint to providing the requested service with the service capabilities exists, and establish the requested service by dynamically providing the service capabilities if it is determined that no constraint exists.

17. An apparatus as claimed in Claim 16, wherein the service support management unit (100) comprises a service analyser unit (202) connected to a switching and management infrastructure (102), via a service signalling interface (212).

18. An apparatus as claimed in Claim 17, wherein the service analyser unit (202) is connected to a service capability controller (112) via a service capability controller interface (214).

19. An apparatus as claimed in any one of Claims 16 to 18, further comprising an interconnect constrainer unit (204).

20. An apparatus as claimed in any one of Claims 16 to 19, further comprising a traffic management unit (206).

21. An apparatus as claimed in any one of Claims 16 to 20, further comprising a mobility management unit (208).

22. An apparatus as claimed in any one of Claims 16 to 21, further comprising a resource management unit (210).

23. An apparatus.as claimed in any one of Claims 16 to 22, further comprising an interconnect gateway unit (114).

24. An apparatus as claimed in Claim 23, wherein the interconnect gateway unit (114) comprises a gateway executive unit (300) and a gateway list store (302).

25. An apparatus as claimed in Claim 23, wherein the interconnect gateway unit (114) further comprises a store of gateway rules (304).

26. A computer program comprising program instructions adapted to perform the steps of the method of any one of claims 1-14 when said computer program is run on a computer.

27. A computer-readable medium carrying a computer program according to claim 26.

## Patentansprüche

1. Verfahren für die Verwaltung von Dienstleistungsfähigkeiten in einem Telekommunikationsnetzwerk ansprechend auf eine Dienstanforderung, wobei das Verfahren die folgenden Schritte aufweist:
Bestimmung, welche Gateways bzw. Netzübergänge aus einer Liste von verfügbaren Gateways bzw. Netzübergängen (302) für den angeforderten Dienst geeignet sind;
Extraktion geeigneter Gateway-Auflageregeln (306 bis 312) aus einem Speicher (304) für Gateway-Regeln;
Extraktion geeigneter Regeln für den angeforderten Dienst;
Transfer jeglicher Auflageregeln aufgrund der Verwendung des Gateways and jeglicher Regeln für den angeforderten Dienst zu einer Dienst-Analyseeinheit (202);
Auswahl technischer Parameter für die Instantiierung des Dienstes in Übereinstimmung mit diesen übermittelten Auflageregeln; und
Aufbau bzw. Einrichtung des Dienstes unter Verwendung von Dienstleistungsfähigkeiten, welche die ausgewählten technischen Parameter erfüllen.

2. Verfahren nach Anspruch 1, welches des Weiteren die folgenden Schritte aufweist:
Anforderung einer Anzeige des Speichers (204) für Gateway-Regeln, ob eine Auflage bzw. Einschränkung bei der Bereitstellung des angeforderten Dienstes mit den Dienstleistungsfähigkeiten existiert oder nicht; und
Aufbau bzw. Einrichtung des angeforderten Dienstes durch dynamische Bereitstellung der Dienstleistungsfähigkeiten, falls festgestellt wird, dass keine Auflage bzw. Einschränkung vorliegt.

3. Verfahren nach Anspruch 2, welches des Weiteren den Schritt der Bewertung einer jeden Dienstleistungsfähigkeit aufweist, welche zur Bereitstellung des angeforderten Dienstes erforderlich ist, um zu bestimmen, ob eine Auflage bzw. Einschränkung vorliegt.

4. Verfahren nach Anspruch 2 oder 3, welches des Weiteren den folgenden Schritt aufweist:
Bereitstellung einer Anzeige durch den Speicher für Gateway-Regeln, dass eine Auflage bzw. Einschränkung vorliegt, wenn keine geeigneten Gateways für den angeforderten Dienst existieren.

5. Verfahren nach einem der vorhergehenden Ansprüche, **dadurch gekennzeichnet, dass** die Gateway-Auflageregeln eines jeden Gateways auf einer Zusammenarbeits- bzw. Verknüpfungsfunktion des Gateways basieren.

6. Verfahren nach Anspruch 5, **dadurch gekennzeichnet, dass** die Zusammenarbeits- bzw. Verknüpfungsfunktion die Codewandlung bzw. Transcodierung ist.

7. Verfahren nach einem der vorhergehenden Ansprüche, welches des Weiteren die folgenden Schritte aufweist:
Anforderung einer Anzeige durch eine Verkehrs-Verwaltungseinheit, ob jegliche Auflage für die Bereitstellung des angeforderten Dienstes mit den Dienstleistungsfähigkeiten existiert oder nicht;
Bereitstellung einer Anzeige durch die Verkehrs-Verwaltungseinheit, dass eine Auflage bzw. Einschränkung existiert, wenn eine Analyse der Verkehrsaktivität bzw. des Nutzungsaufkommens anzeigt, dass das Telekommunikationsnetzwerk den angeforderten Dienst nicht unterstützen bzw. aufrechterhalten kann;
Aufbau bzw. Einrichtung des angeforderten Dienstes durch dynamische Bereitstellung der Dienstleistungsfähigkeiten, falls durch die Analyse der Verkehrsaktivität bzw. des Nutzungsaufkommens festgestellt wird, dass keine Auflage bzw. Einschränkung existiert.

8. Verfahren nach einem der vorhergehenden Ansprüche, welches des Weiteren die folgenden Schritte aufweist:
Anforderung einer Anzeige durch eine Mobilitäts-Verwaltungseinheit, ob jegliche Auflage bzw. Einschränkung für die Bereitstellung des angeforderten Dienstes mit den Dienstleistungsfähigkeiten existiert oder nicht;
Bereitstellung einer Anzeige durch die Mobilitäts-Verwaltungseinheit, dass eine Auflage bzw. Einschränkung existiert, wenn eine Analyse, welche die Mobilität eines Endgeräts bestimmt, anzeigt, dass das Telekommunikationsnetzwerk den angeforderten Dienst nicht unterstützen bzw. aufrechterhalten kann;
Aufbau bzw. Einrichtung des angeforderten Dienstes durch dynamische Bereitstellung der Dienstleistungsfähigkeiten, falls durch die Analyse der Endgerät-Mobilität festgestellt wird, dass keine Auflage bzw. Einschränkung existiert.

9. Verfahren nach einem der vorhergehenden Ansprüche, welches des Weiteren die folgenden Schritte aufweist:
Anforderung einer Anzeige durch eine Ressourcen-Verwaltungseinheit, ob jegliche Auflage bzw. Einschränkung für die Bereitstellung des angeforderten Dienstes mit den Dienstleistungsfähigkeiten existiert oder nicht;
Bereitstellung einer Angabe durch die Ressourcen-Verwaltungseinheit, dass eine Auflage bzw. Einschränkung existiert, wenn eine Analyse der für ein Endgerät verfügbaren Ressourcen anzeigt, dass das Telekommunikationsnetzwerk den angeforderten Dienst nicht unterstützen bzw. aufrechterhalten kann;
Aufbau bzw. Einrichtung des angeforderten Dienstes durch dynamische Bereitstellung der Dienstleistungsfähigkeiten, falls durch die Analyse der für das Endgerät verfügbaren Ressourcen festgestellt wird, dass keine Auflage bzw. Einschränkung existiert.

10. Verfahren nach einem der vorhergehenden Ansprüche, welches des Weiteren den Schritt der Bestimmung (808) aufweist, ob der angeforderte Dienst neu konfiguriert werden kann.

11. Verfahren nach Anspruch 10, welches des Weiteren den Schritt der Neu- bzw. Rekonfiguration (810) anderer durch das Netzwerk unterstützter Dienste aufweist.

12. Verfahren nach einem der vorhergehenden Ansprüche, welches des Weiteren den Schritt der Auswahl mindestens eines technischen Parameters aufweist, welcher die mindestens eine Dienstleistungsfähigkeit nach Auswahl der Dienstleistungsfähgikeit definiert.

13. Verfahren nach einem der vorhergehenden Ansprüche, welches des Weiteren die Auswahl mindestens eines technischen Parameters aufweist, welcher die mindestens eine Dienstleistungsfähigkeit während der Dauer eines Anrufes definiert.

14. Verfahren nach einem der vorhergehenden Ansprüche, welches des Weiteren die Einrichtung der Vermittlungs- und Übertragungseinrichtungen des Telekommunikationsnetzwerks (100) aufweist, um den angeforderten Dienst basierend auf den ausgewählten technischen Parametern einzurichten.

15. Vorrichtung zur Verwaltung von Dienstleistungsfähigkeiten in einem Telekommunikationsnetzwerk ansprechend auf eine Dienstanforderung, wobei die Vorrichtung Folgendes aufweist:
einen Gateway-Manager (300) zur Bestimmung, welche Gateways aus der Liste verfügbarer Gateways (302) für den angeforderten Dienst geeignet sind, und zur Extraktion geeigneter bzw. angebrachter Gateway-Auflageregeln (306 bis 312) aus einem Speicher (304) für Gateway-Regeln;
eine Einrichtung zur Extraktion der geeigneten Regeln für den angeforderten Dienst;
eine Einrichtung für den Transfer jeglicher Auflageregeln aufgrund der Verwendung des Gateways und Regeln für den angeforderten Dienst zu einer Dienst-Analyseeinheit (202);
eine Einrichtung für die Auswahl technischer Parameter für die Instantiierung des Dienstes in Übereinstimmung mit diesen Auflagen bzw. Einschränkungen; und
eine Einrichtung für den Aufbau des Dienstes unter Verwendung von Dienstleistungsfähigkeiten, welche die ausgewählten technischen Parameter erfüllen.

16. Vorrichtung nach Anspruch 15, welche des Weiteren eine Dienstunterstützungs-Verwaltungseinheit (110) aufweist, welche zur Anforderung einer Anzeige darüber angeordnet ist, welche Gateways aus einer Liste verfügbarer Gateways für den angeforderten Dienst geeignet sind, sowie zur Anforderung einer Anzeige durch einen Speicher (204) für Gateway-Regeln, oder einer Verkehrs-Verwaltungseinheit (206), oder einer Mobilitäts-Verwaltungseinheit (208), oder einer Ressourcen-Verwaltungseinheit (402, 404, 406, 408), ob jegliche Auflage bzw. Einschränkung für die Bereitstellung des angeforderten Dienstes mit den Dienstleistungsfähigkeiten existiert oder nicht, und Aufbau bzw. Einrichtung des angeforderten Dienstes durch dynamische Bereitstellung der Dienstleistungsfähigkeiten, falls festgestellt wird, dass keine Auflage bzw. Einschränkung existiert.

17. Vorrichtung nach Anspruch 16, **dadurch gekennzeichnet, dass** die Dienstunterstützungs-Verwaltungseinheit (110) eine Dienstanalyseeinheit (202) aufweist, welche über eine Dienst-Signalisierungsschnittstelle (212) mit einer Vermittlungs- und Verwaltungsinfrastruktur (102) verbunden ist.

18. Vorrichtung nach Anspruch 17, **dadurch gekennzeichnet, dass** die Dienst-Analyseeinheit (202) über eine Dienstleistungsfähigkeits-Steuerschnittstelle (214) mit einer Dienstleistungsfähigkeits-Steuereinheit (112) verbunden ist.

19. Vorrichtung nach einem der Ansprüche 16 bis 18, welche des Weiteren eine Verbindungs- bzw. Zusammenschaltungs-Einschränkungseinheit (204) aufweist.

20. Vorrichtung nach einem der Ansprüche 16 bis 19, welche des Weiteren eine Verkehrs-Verwaltungseinheit (206) aufweist.

21. Vorrichtung nach einem der Ansprüche 16 bis 20, welche des Weiteren eine Mobilitäts-Verwaltungseinheit (208) aufweist.

22. Vorrichtung nach einem der Ansprüche 16 bis 21, welche des Weiteren eine Ressourcen-Verwaltungseinheit (210) aufweist.

23. Vorrichtung nach einem der Ansprüche 16 bis 22, welches des Weiteren eine Verbindungsgateway-Einheit (114) aufweist.

24. Vorrichtung nach Anspruch 23, **dadurch gekennzeichnet, dass** die Verbindungsgateway-Einheit (114) eine Gateway-Managereinheit (300) und einen Gatewaylisten-Speicher (302) aufweist.

25. Vorrichtung nach Anspruch 23, **dadurch gekennzeichnet, dass** die Verbindungsgateway-Einheit (114) des Weiteren einen Speicher (304) für Gateway-Regeln aufweist.

26. Computerprogramm, welches Programmbefehle aufweist, welche zur Ausführung der Schritte des Verfahrens nach einem der Ansprüche 1 bis 14 ausgelegt sind, wenn das Computerprogramm auf einem Computer ausgeführt wird.

27. Computerlesbares Medium, welches ein Computerprogramm nach Anspruch 26 trägt bzw. aufnimmt.

## Revendications

1. Procédé de gestion des capacités de service dans un réseau de télécommunication en réponse à une demande de service comprenant les étapes consistant à:
déterminer quelles passerelles dans une liste de passerelles (302) disponibles sont appropriées pour le service demandé;
extraire des règles de contrainte de passerelle (306 à 312) appropriées d'une mémoire de règles de passerelle (304);
extraire des règles appropriées pour le service demandé;
transférer les règles de contrainte dues à l'utilisation de la passerelle et les règles pour le service demandé à une unité d'analyse de service (202);
sélectionner des paramètres techniques pour l'instanciation du service cohérents avec ces règles de contrainte transférées; et
établir le service en utilisant des capacités de service conformes aux paramètres techniques sélectionnés.

2. Procédé selon la revendication 1, comprenant en outre les étapes consistant à:
demander une indication auprès d'une mémoire de règles de passerelle (204) du fait qu'une quelconque contrainte à la fourniture du service demandé avec les capacités de service existe ou non; et
établir le service demandé en fournissant dynamiquement les capacités de service s'il est déterminé qu'aucune contrainte n'existe.

3. Procédé selon la revendication 2, comprenant en outre l'étape consistant à évaluer chaque capacité de service nécessaire pour fournir le service demandé pour déterminer si une contrainte existe.

4. Procédé selon la revendication 2 ou 3, comprenant en outre l'étape consistant à:
fournir, par la mémoire de règles de passerelle, une indication du fait qu'une contrainte existe lorsqu'aucune passerelle appropriée n'existe pour le service demandé.

5. Procédé selon l'une quelconque des revendications précédentes, dans lequel les règles de contrainte de passerelle de chaque passerelle sont basées sur une fonction d'interfonctionnement de la passerelle.

6. Procédé selon la revendication 5, dans lequel la fonction d'interfonctionnement est un transcodage.

7. Procédé selon l'une quelconque des revendications précédentes, comprenant en outre les étapes consistant à:
demander une indication, auprès d'une unité de gestion de trafic, du fait qu'une quelconque contrainte à la fourniture du service demandé avec les capacités de service existe ou non;
fournir, par l'unité de gestion de trafic, une indication du fait qu'une contrainte existe lorsque l'analyse de l'activité de trafic indique que le réseau de télécommunication ne peut pas prendre en charge le service demandé;
établir le service demandé en fournissant dynamiquement les capacités de service s'il est déterminé à partir de l'analyse de l'activité de trafic qu'aucune contrainte n'existe.

8. Procédé selon l'une quelconque des revendications précédentes, comprenant en outre les étapes consistant à:
demander une indication, auprès d'une unité de gestion de mobilité, du fait qu'une quelconque contrainte à la fourniture du service demandé avec les capacités de service existe ou non;
fournir, par l'unité de gestion de mobilité, une indication du fait qu'une contrainte existe lorsque l'analyse déterminant la mobilité d'un terminal indique que le réseau de télécommunication ne peut pas prendre en charge le service demandé;
établir le service demandé en fournissant dynamiquement les capacités de service s'il est déterminé à partir de l'analyse de mobilité de terminal qu'aucune contrainte n'existe.

9. Procédé selon l'une quelconque des revendications précédentes, comprenant en outre les étapes consistant à:
demander une indication, auprès d'une unité de gestion de ressources, du fait qu'une quelconque contrainte à la fourniture du service demandé avec les capacités de service existe ou non;
fournir, par l'unité de gestion de ressources, une indication du fait qu'une contrainte existe lorsque l'analyse des ressources disponibles pour un terminal indique que le réseau de télécommunication ne peut pas prendre en charge le service demandé;
établir le service demandé en fournissant dynamiquement les capacités de service s'il est déterminé à partir de l'analyse des ressources disponibles pour le terminal qu'aucune contrainte n'existe.

10. Procédé selon l'une quelconque des revendications précédentes, consistant en outre à déterminer (808) si le service demandé peut être reconfiguré.

11. Procédé selon la revendication 10, consistant en outre à reconfigurer (810) d'autres services pris en charge par le réseau.

12. Procédé selon l'une quelconque des revendications précédentes, consistant en outre à sélectionner au moins un paramètre technique qui définit ladite au moins une capacité de service après la sélection de la capacité de service.

13. Procédé selon l'une quelconque des revendications précédentes, consistant en outre à sélectionner au moins un paramètre technique qui définit ladite au moins une capacité de service pendant toute la durée d'un appel.

14. Procédé selon l'une quelconque des revendications précédentes, consistant en outre à configurer les installations de commutation et de transmission du réseau de télécommunication (100) afin d'établir le service demandé sur la base des paramètres techniques sélectionnés.

15. Dispositif de gestion des capacités de service dans un réseau de télécommunication en réponse à une demande de service comprenant:
une unité d'exécution de passerelle (300) pour déterminer quelles passerelles dans une liste de passerelles (302) disponibles sont appropriées pour le service demandé et pour extraire des règles de contrainte de passerelle (306 à 312) appropriées d'une mémoire de règles de passerelle (304);
des moyens pour extraire les règles appropriées pour le service demandé;
des moyens pour transférer les règles de contrainte dues à l'utilisation de la passerelle et les règles pour le service demandé à une unité d'analyse de service (202);
des moyens pour sélectionner des paramètres techniques pour l'instanciation du service cohérents avec ces contraintes; et
des moyens pour établir le service en utilisant des capacités de service conformes aux paramètres techniques sélectionnés.

16. Dispositif selon la revendication 15, comprenant en outre une unité de gestion de prise en charge de service (110) agencée pour demander une indication des passerelles dans une liste de passerelles disponibles qui sont appropriées pour le service demandé et une indication, auprès d'une mémoire de règles de passerelle (204), ou d'une unité de gestion de trafic (206), ou d'une unité de gestion de mobilité (208) ou d'une unité de gestion de ressources (402, 404, 406, 408) du fait qu'une quelconque contrainte à la fourniture du service demandé avec les capacités de service existe ou non, et établir le service demandé en fournissant dynamiquement les capacités de service s'il est déterminé qu'aucune contrainte n'existe.

17. Dispositif selon la revendication 16, dans lequel l'unité de gestion de prise en charge de service (100) comprend une unité d'analyse de service (202) connectée à une infrastructure de commutation et de gestion (102), par l'intermédiaire d'une interface de signalisation de service (212).

18. Dispositif selon la revendication 17, dans lequel l'unité d'analyse de service (202) est connectée à un contrôleur de capacités de service (112) par l'intermédiaire d'une interface de contrôleur de capacités de service (214).

19. Dispositif selon l'une quelconque des revendications 16 à 18, comprenant en outre une unité de contrainte d'interconnexion (204).

20. Dispositif selon l'une quelconque des revendications 16 à 19, comprenant en outre une unité de gestion de trafic (206).

21. Dispositif selon l'une quelconque des revendications 16 à 20, comprenant en outre une unité de gestion de mobilité (208).

22. Dispositif selon l'une quelconque des revendications 16 à 21, comprenant en outre une unité de gestion de ressources (210).

23. Dispositif selon l'une quelconque des revendications 16 à 22, comprenant en outre une unité de passerelle d'interconnexion (114).

24. Dispositif selon la revendication 23, dans lequel l'unité de passerelle d'interconnexion (114) comprend une unité d'exécution de passerelle (300) et une mémoire de liste de passerelles (302).

25. Dispositif selon la revendication 23, dans lequel l'unité de passerelle d'interconnexion (114) comprend en outre une mémoire de règles de passerelle (304).

26. Programme d'ordinateur comprenant des instructions de programme conçues pour effectuer les étapes du procédé de l'une quelconque des revendications 1 à 14 lorsque ledit programme d'ordinateur est exécuté sur un ordinateur.

27. Support pouvant être lu par un ordinateur supportant un programme d'ordinateur selon la revendication 26.
